# EUROPEAN PATENT APPLICATION

(11) **EP 4 424 158 A1**
(43) Date of publication of application: **04.09.2024**
(21) Application number: 24159831.7
(22) Date of filing: 27.02.2024
(51) Int. Cl.: A01M 21/02, A01F 29/04

(54) **PLANT PROCESSING APPARATUS AND METHOD FOR INACTIVATING PLANT MATERIAL**

(30) Priority: 03.03.2023 NL 2034259
(71) Applicant: GKB Machines B.V., 2992 SP Barendrecht (NL)
(72) Inventor: Dijke, Jimmie, 2992 SP Barendrecht (NL); Kraaijeveld, Hendrik, 2992 SP Barendrecht (NL)
(74) Representative: Arnold & Siedsma

(57) **Abstract**

Plant processing apparatus for inactivating plant material, comprising a housing with infeed opening for infeed of plant material into a processing compartment of the housing; an elongate shaft placed in the processing compartment of the housing for rotation about its longitudinal axis; at least one first cutting element extending from the shaft in radial direction and rotatable together with the shaft about its longitudinal axis; at least one second cutting element which is connected statically to the housing in the processing compartment, wherein at least one of the at least one first cutting element moves along the at least one second cutting element when the shaft rotates about its longitudinal axis in order to cut the plant material between the two; a pressing plate with perforations which is arranged in the processing compartment at an outfeed end of the shaft and is placed substantially perpendicularly of the longitudinal axis thereof; and a milling cutter with at least one third cutting element which is rotatable about a rotation axis, wherein the milling cutter is disposed on a side of the pressing plate remote from the shaft, wherein the processed plant material is guided from the milling cutter to an outfeed opening of the housing for outfeed thereof.

## Description

The present invention relates to a plant processing apparatus and to a vehicle equipped with such a plant processing apparatus, and a method for inactivating plant material.

Pruning and/or removing plants and plant material is an important part of landscape maintenance, for instance in agricultural and horticultural areas and public green spaces such as woods, parks, roadsides and so on. Ornamental plants are for instance pruned here, and undesirable vegetation is for instance removed. Undesirable vegetation includes for instance weeds, these also including plants that grow very quickly and/or are difficult to control. Invasive (exotic) plant species that have few or no natural enemies in the area where they grow are for instance causing a lot of inconvenience nowadays. Significant examples of such invasive plant species are for instance giant hogweed and several variants of knotweed. One plant species causing a lot of problems is for instance Japanese knotweed (*Fallopia japonica*)*,* which is very difficult to control. Small residues of such invasive plant species, for instance following pruning or removal thereof, can sometimes still form a new plant, which can once again grow rampant. (Pruning) waste of such plant species is therefore generally removed so as to be processed or destroyed elsewhere in order to thus reduce the chances of the waste once again resulting in new uncontrolled growth. Such transport is not environmentally friendly, and entails the necessary costs. Transport also entails the risk of plant material being lost along the way or not being destroyed properly, so that the invasive plant species might begin to overgrow in another location entirely and is so spread further and further over an increasingly large area.

It is an object of the present invention, among others, to reduce or obviate the above stated prior art drawbacks.

According to a first aspect of the invention, a plant processing apparatus for inactivating plant material is provided for this purpose, comprising a housing with infeed opening for infeed of plant material into a processing compartment of the housing, an elongate shaft placed in the processing compartment of the housing for rotation about its longitudinal axis, at least one first cutting element extending from the shaft in radial direction and rotatable together with the shaft about its longitudinal axis, at least one second cutting element which is connected statically to the housing in the processing compartment, wherein at least one of the at least one first cutting element moves along the at least one second cutting element when the shaft rotates about its longitudinal axis in order to cut the plant material between the two, a pressing plate with perforations which is arranged in the processing compartment at an outfeed end of the shaft and is placed substantially perpendicularly of the longitudinal axis thereof, and a milling cutter with at least one third cutting element which is rotatable about a rotation axis, wherein the milling cutter is disposed on a side of the pressing plate remote from the shaft, wherein the processed plant material is guided from the milling cutter to an outfeed opening of the housing for outfeed thereof.

The plant processing apparatus according to the first aspect ensures that a plant material is inactivated in several steps. Inactivating the plant material means, among other things, that the plant material is processed such that the processed plant material can no longer result in growth of this plant material when it comes to lie on (fertile) soil. In other words, inactivating the plant material means that there is no more life in the plant material, i.e. the plant material no longer has any germination capacity. This is important mainly for plant species that are able to grow back into an overgrowing plant mass out of a very small remaining cutting (for instance a piece of root or a node on the stem of the plant, and so on). The apparatus achieves this by finely grinding the plant material by means of the first and second cutting elements, transporting the ground plant material toward the pressing plate and thereby pressing the ground plant material, extruding the ground and pressed plant material through the perforations of the pressing plate and then once again grinding up the ground, pressed and extruded plant material by means of a milling cutter. Successively performing these steps ensures inactivation of the plant material so that it is unable (or at least substantially unable) to result in further growth of the plant material fed out by the apparatus. The plant material need hereby not be transported to a different location, since it is inactive and can therefore be dumped at the site of the pruning and/or removal work, and even serves as compost to a certain extent. Unnecessary transport and its accompanying costs and environmental impact are thus avoided hereby, with the additional advantage that the residual material flow of the plants can be monitored. This ensures that the plant species that was processed will not be spread any further by possible loss of the material during such transport and/or incorrect or incomplete processing or destruction of the material. Such spreading and associated new growth locations of the plant material result in great expense to and emission of CO₂ in the community due to the transport and/or the destruction.

An additional advantage of the plant processing apparatus is also that many different types of plant material can be processed, and particularly reduced, thereby. The apparatus is particularly fairly unaffected by characteristics such as humidity, dry substance content and structure of the plant material, also because the plant residues are cut as well as pressed, after which the dry fraction of the material is then also cut additionally. For a plant such as Japanese knotweed for example it is for instance also the case that the characteristics thereof vary throughout the year (for instance in respect of toughness, hardness and moisture content). The apparatus also grinds up the plant material very finely so that it can be utilized in a circular economy in simple manner, for instance as compost or as raw material for further products or methods. This is for instance also advantageous in industries such as plant nurseries, wherein rejected plants or other residual plant waste can be made into compost for new plants.

There is preferably some clearance between the at least one first cutting element which moves along the at least one second cutting element in order to cut the plant material between the two. The clearance is preferably between about 1 and about 20 mm, and more preferably about 5 to about 10 mm. Since plant material can be rich in relatively long and strong fibres, such clearance ensures that the apparatus will become jammed less easily and this also causes the apparatus to require less power.

The housing, and particularly the processing compartment, is preferably at least partially cylindrical. The shaft is preferably arranged in the at least partially cylindrical processing compartment, coaxially therewith. When the shaft rotates, a distal outer end of the at least one first cutting element preferably describes a circular path lying adjacently of at least a part of the inner wall of the processing compartment. A clearance of for instance 0.5 cm to 2.0 cm is preferably provided between the circular path and the part of the inner wall of the processing compartment.

The housing preferably comprises a bottom part and a top part, wherein the top part is preferably removable from the bottom part so that the processing compartment is accessible for maintenance work, such as cleaning and repairs. The top part can for instance be pivotally connected to the bottom part. The infeed opening of the housing is preferably provided in the top part of the housing so that plant material can be introduced into it from above. An inner wall of the bottom part of the housing can be provided with a number of second cutting elements which are disposed in a row and which can be provided at a regular distance from each other in the longitudinal direction of the bottom part of the housing. A distribution other than a row is of course also possible. An inner wall of the top part can also be provided with a number of second cutting elements.

The pressing plate is preferably fixedly connected to a part of the housing. The pressing plate is preferably fixedly connected to the bottom part of the housing. During operation of the apparatus, when the top part of the housing is attached to the bottom part, the pressing plate can also be fastened to the top part of the housing, for instance with bolts and nuts or other (temporary) fastening means known to the skilled person. The pressing plate is preferably formed as a circular plate, i.e. a disc, with perforations therein. A peripheral edge of the disc is preferably provided at least partially with fastening holes so that the pressing plate can be fastened to the housing by arranging fastening elements through the fastening holes, and corresponding fastening holes in the housing.

The milling cutter can preferably be mounted on the housing and/or the pressing plate of the apparatus by means of a support element. The milling cutter itself is preferably provided with a protective cover, wherein the outfeed of the apparatus can be formed in the protective cover.

The shaft can be driven directly or indirectly by drive means, such as for instance by an electric motor or combustion engine. It is also possible for the apparatus to be provided with a coupling mechanism whereby the apparatus can be connected to a power take-off (PTO) of a vehicle to which the apparatus can be coupled. The shaft can therefore for instance be driven by such a PTO. The milling cutter can be driven by these same drive means or by different drive means. The rotation axis of the milling cutter is preferably substantially coaxial with the longitudinal axis of the shaft. The shaft and/or milling cutter can be driven via one or more transmissions. The shaft and milling cutter can therefore be driven at different rotational speeds and/or with different forces and/or torques.

The at least one first cutting element can comprise a straight or curved cutting edge. The cutting edge can be placed at an angle relative to a radial direction from the shaft. The cutting edge can for instance be crescent-shaped.

At least some of the perforations preferably have a hexagonal form. It has been found that when the perforations have a hexagonal form, a good balance is achieved between the overall throughfeed area of the pressing plate and having good cutting surfaces (the sides of the hexagon). The distance between the perforations is also substantially constant when hexagonal holes are used, so that uniform supporting bridging sections are created therebetween.

At least one scraping element is preferably arranged on the shaft at the outfeed end thereof, wherein the scraping element extends in radial direction from the shaft and is rotatable together with the shaft about its longitudinal axis, and is configured to scrape plant material off the pressing plate. The at least one scraping element more preferably comprises a blade part and a protrusion extending from the blade part toward the pressing plate, wherein the scraping element is configured to scrape plant material off the pressing plate using substantially the protrusion. A side of the blade part facing toward the pressing plate preferably forms an angle relative to the pressing plate, such that this side of the blade part runs from the protrusion away from the pressing plate in the longitudinal direction of the shaft. The blade part therefore forms together with the pressing plate a wedge-shaped space between the two, wherein the wedge-shaped space is open in a tangential rotation direction of the scraping element so that plant material is forced into the narrow part of the wedge-shaped space during rotation of the shaft in order to thereby press and extrude the plant material through the perforations of the pressing plate.

A number of second cutting elements is preferably arranged at a barrier position in the longitudinal direction of the shaft all around the shaft and at a distance from each other in order to thus form a slowing barrier, such that the transport of the plant material toward the outfeed end of the shaft is slowed down by the slowing barrier. The plant processing apparatus more preferably comprises at least two slowing barriers placed at a distance from each other in the longitudinal direction of the shaft. The second cutting elements forming a slowing barrier can be distributed uniformly around the shaft and/or the processing compartment. A non-uniform distribution is also possible. A slowing barrier preferably comprises between 5 and 12 second cutting elements, and more preferably about 10. The slowing barrier essentially narrows the processing compartment locally so that the mass of plant material is slowed down there in its transport from the infeed opening to the outfeed opening of the apparatus. The slowing barrier thereby also has the result that the plant material is pressed while it is being cut by the first and second cutting elements.

The processing compartment can be divided by a slowing barrier into a cutting compartment and a cutting and pressing compartment, wherein the cutting compartment is located on the infeed side of the apparatus and the cutting and pressing compartment is located on the outfeed side of the apparatus. When a second (or further) slowing barrier is used, still further compartments can be defined. When two slowing barriers are used, the cutting compartment can for instance be defined first, as seen from the infeed side of the apparatus, followed by the cutting and pressing compartment downstream of the first slowing barrier, and a cutting, pressing and separating compartment downstream of the second slowing barrier, wherein this latter lies adjacently of the pressing plate of the apparatus. The separating function of this compartment comprises of separating the solid fraction of the plant material from the liquid fraction of the plant material. A bottom of the housing preferably comprises a liquid outlet for outfeed of a liquid fraction of the plant material. The liquid outlet is preferably provided with a closing mechanism such as a valve or a tap, whereby the liquid outlet can be closed and opened.

A number of first cutting elements are preferably arranged along a helical path on and around the shaft, such that the transport of the plant material from the infeed opening toward the outfeed end of the shaft is enhanced. A plurality of such helical paths can be formed on one shaft.

During operation of the plant processing apparatus the shaft preferably rotates at a first rotational speed and the milling cutter rotates at a second rotational speed, wherein the first rotational speed and the second rotational speed differ from each other. More preferably, the second rotational speed is higher than the first rotational speed. The first rotational speed is preferably set between about 50 revolutions per minute (rpm) and 200 rpm, and more preferably about 80-120 rpm, and still more preferably about 100 rpm. The second rotational speed is preferably set between about 1000-3000 rpm, more preferably about 1500-2500 rpm, and still more preferably about 2000 rpm.

When cutting edges of the at least one second cutting element and an at least one first cutting element lying adjacently in the longitudinal direction of the shaft intersect each other, as seen from a cross-section perpendicularly of the longitudinal axis of the shaft, a distance between the cutting edges preferably increases in the direction of the shaft. By forming such an angle between the cutting edges the plant material is moved toward the shaft so that the plant material is as it were pulled inward, whereby the plant material will be flung out less readily through for instance the infeed opening. Such an angle also ensures that the plant material is better spatially distributed in the processing compartment so that during processing the material will not end up mainly on the inner wall of the housing due to the centrifugal force.

The milling cutter is preferably pressed toward the pressing plate by means of a resilient element. The resilient element is more preferably a spring, and still more preferably a compression spring. The compression spring can for instance be arranged coaxially round the rotation axis of the milling cutter, and can for instance make contact with both the milling cutter and the housing or a support element of the milling cutter or its rotation shaft. Such a construction provides for a close fit of the milling cutter onto the pressing plate, irrespective of any expansion of components due to heat. The resilient element also absorbs impacts to which the milling cutter is subjected, for instance from material that finds its way to the milling cutter but is difficult or impossible to mill.

According to a second aspect of the invention, a vehicle is provided which is equipped with a plant processing apparatus according to the invention as described above. This vehicle can for instance be an agricultural vehicle such as a tractor. The vehicle can be equipped with a PTO whereby the apparatus can be supplied with power. A chassis with displacing means (e.g. wheels, caterpillar tracks, legs and so on) can also be mounted on the plant processing apparatus in order to form the vehicle. In a preferred embodiment a plant processing apparatus with a caterpillar chassis and drive mechanism is for instance provided, whereby a relatively compact vehicle according to the second aspect is obtained so that it can operate in hard-to-reach places, such as narrow spaces and the like.

According to a third aspect of the invention, a method is provided for inactivating plant material, comprising the steps of:
- cutting up the plant material;
- simultaneously pressing and cutting up the cut-up plant material;
- extruding a solid fraction of the pressed and cut-up plant material; and
- additionally cutting the solid fraction of the pressed and cut-up plant material.

Such a method provides similar advantages as the above described apparatus and the vehicle according to respectively the first and second aspect of the invention.

The method preferably further comprises the step of discharging a liquid fraction of the pressed and cut-up plant material. The step of discharging a liquid fraction of the pressed and cut-up plant material is preferably performed after the step of simultaneously pressing and cutting up the cut-up plant material, and preferably before the step of extruding a solid fraction of the pressed and cut-up plant material.

The method preferably comprises the step of providing a plant processing apparatus according to any of the above stated embodiments of the first aspect of the invention, or the vehicle according to the second aspect of the invention, wherein:
- the step of cutting up the plant material is performed by means of at least the at least one first cutting element and the at least one second cutting element,
- the step of simultaneously pressing and cutting up the cut-up plant material is performed by means of at least the at least one first cutting element, the at least one second cutting element, and preferably also the pressing plate,
- the step of extruding the solid fraction of the pressed and cut-up plant material is performed by means of at least the pressing plate, and
- the step of additionally cutting the solid fraction of the pressed and cut-up plant material is performed by means of at least the milling cutter.

More preferably, the method further comprises of feeding in the plant material via the infeed opening of the housing and/or feeding out the additionally cut solid fraction via the outfeed opening. It is further preferred for the step of discharging a liquid fraction of the pressed and cut-up plant material to be performed by means of at least the liquid outlet.

According to a fourth aspect of the invention, provision is made for use of the plant processing apparatus or the vehicle according to respectively the first and second aspect of the invention for performing the method according to the third aspect of the invention.

The present invention will be further elucidated below with reference to the appended drawings, wherein:
- Fig. 1 shows a flow diagram for processing plant material;
- Fig. 2 shows a schematic side view of a plant processing apparatus;
- Fig. 3 shows a first cut-away perspective view of a plant processing apparatus wherein several components have been drawn transparently;
- Fig. 4 shows a second cut-away perspective view of the plant processing apparatus of fig. 3 wherein several components have been drawn transparently;
- Fig. 5 shows a third cut-away perspective view of the plant processing apparatus of figs. 3 and 4;
- Fig. 6 shows a perspective detail view of first and second cutting elements;
- Fig. 7 shows a perspective detail view of a scraping element;
- Figs. 8A-8C show a schematic cross-sectional view of a first and a second cutting element at different rotation positions relative to each other; and
- Fig. 9 shows a vehicle with the plant processing apparatus thereon.

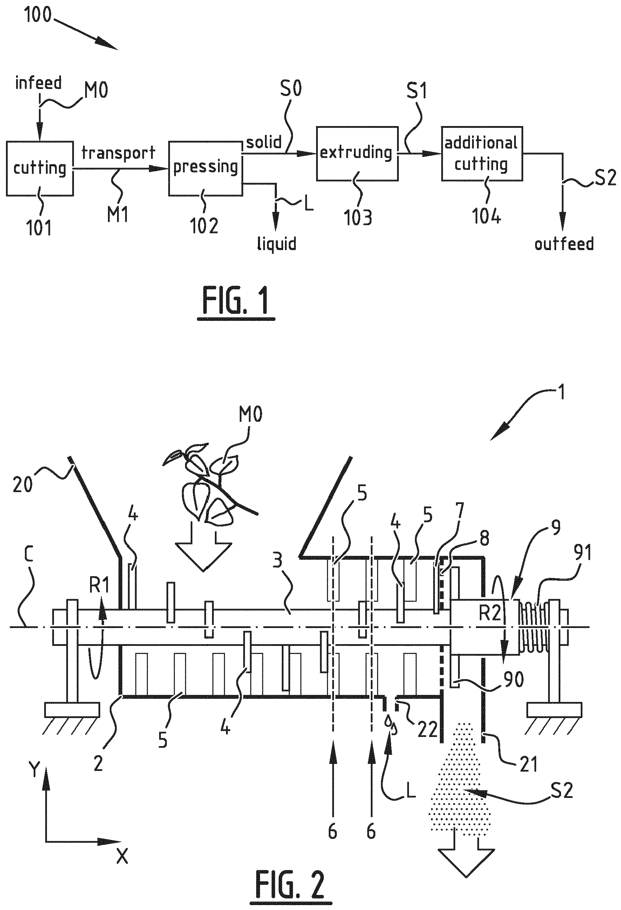

Drawn in figure 1 is a flow diagram which illustrates an example of a method 100 for inactivating plant material. The arrows indicate the transport of the plant material to the different method steps. Method 100 starts with infeed of the unprocessed plant material M0 to a step of cutting 101 the unprocessed plant material M0. The cut plant material M1 is then transported to a step of pressing 102 the cut plant material M1. The steps of cutting 101 and pressing 102 can partially or wholly overlap, i.e. take place at the same time. After the cutting 101 and pressing 102 a liquid fraction L of the pressed plant material can be discharged. A solid fraction S0 of the pressed plant material is subjected to a step of extruding 103 thereof. The steps of cutting 102 and extruding 103 can also partially overlap, i.e. take place at the same time. The extruded solid fraction S1 of the plant material is then subjected to a step of additional cutting thereof, after which the additionally cut solid fraction S2 of the plant material is fed out. Successively performing these steps of method 100 ensures that the plant material has been inactivated, so that it is unable (or at least substantially unable) to result in further growth of the plant material fed out by method 100. The plant material need hereby not be transported to a different location, since it is inactive and can therefore be dumped at the site of the pruning and/or removal work, and even serves as compost to a certain extent. Unnecessary transport and its accompanying costs and environmental impact are thus avoided hereby, with the additional advantage that the residual material flow of the plants can be monitored. This ensures that the plant species that was processed will not be spread any further by possible loss of the material during such transport and/or incorrect or incomplete processing or destruction of the material. Such spreading and associated new growth locations of the plant material result in great expense to and emission of CO₂ in the community due to the transport and/or the destruction.

Figure 2 shows a schematic side view of a plant processing apparatus 1 which can for instance be used to perform the method 100 of figure 1. Apparatus 1 has a housing 2 in which a shaft 3 is arranged for rotation about a central axis C in at least a first rotation direction R1. The shaft 3 is provided with first cutting elements 4, also referred to as cutting blades 4, which extend from shaft 3 and are placed along a helical path around shaft 3. Cutting blades 4 rotate together with shaft 3 about the central axis C in the first rotation direction R1. The housing 2 in which shaft 3 is disposed has an infeed opening 20 through which unprocessed plant material M0 can be fed into the housing 2 of apparatus 1. An inner side of housing 2 is provided with second cutting elements 5, also referred to as static shear blades 5, which are connected statically and fixedly to the housing 2. As can be seen, cutting blades 4 move along corresponding shear blades 5 when shaft 3 rotates about the first central axis C. Plant material M0 can therefore be cut between cutting blades 4 and shear blades 5. It is possible that not every cutting blade 4 has a corresponding shear blade 5.

Inside housing 2 shear blades 5 can be arranged all around shaft 3 at different positions in the horizontal direction X. At a position in the horizontal direction X, i.e. in longitudinal direction of shaft 3, a number of shear blades 5 can for instance be arranged all around shaft 3, wherein shear blades 5 are for instance arranged at a regular distance from each other and so together form a slowing barrier 6. A slowing barrier 6 slows down the mass of the cut plant material (not shown here) being transported from infeed 20 toward outfeed 21. The slowing on one hand causes the plant material to be cut by cutting blades 4 and shear blades 5 for longer and on the other hand causes it to be pressed together. The pressing causes the mass to lose a part of its moisture as liquid fraction L, which can then be discharged from housing 2 via a liquid discharge 22.

In addition to cutting blades 4, a scraping element 7 is also arranged on shaft 3, which is also referred to as scraping blade 7 or scraping-pressing element 7. Scraping blade 7 is visible at the outfeed end of shaft 3, visible in figure 2 as the right-hand outer end in the horizontal direction X. Scraping blade 7 has a dual function, namely on one hand scraping clean the pressing plate 8 and on the other hand pressing the plant material through pressing plate 8. Pressing plate 8 has perforations 80 through which the cut and pressed plant material (not shown here) is extruded.

Disposed on the side of pressing plate 8 remote from shaft 3 is a milling cutter 9. The milling cutter 9 comprises third cutting elements 90, which are also referred to as milling cutter blades 90. Just as shaft 3, milling cutter 9 and its cutting elements 90 can rotate about the central axis C, but in a second rotation direction R2, which may differ from the first rotation direction R1. Milling cutter 9 is thus optionally able to rotate independently of shaft 3. The plant material, mainly the solid fraction of the plant material, extruded toward milling cutter 9 by pressing plate 8 is cut up further by the milling cutter blades 90. Milling cutter 9 is pressed toward pressing plate 8 in the horizontal direction X by a spring element 91 in order to improve, among other things, the effectiveness of the additional cutting by the milling cutter blades 90. The spring 91 also provides some possible movement, for instance when components expand due to heat. The additionally cut solid fraction S2 of the plant material is fed out through the outfeed opening 21 of housing 2. This solid fraction S2 is inactivated plant material which no longer has any growth potential, or in any case has only negligible growth potential. This allows the solid fraction S2 to be dumped without problem at the location where the unprocessed plant material M0 was found.

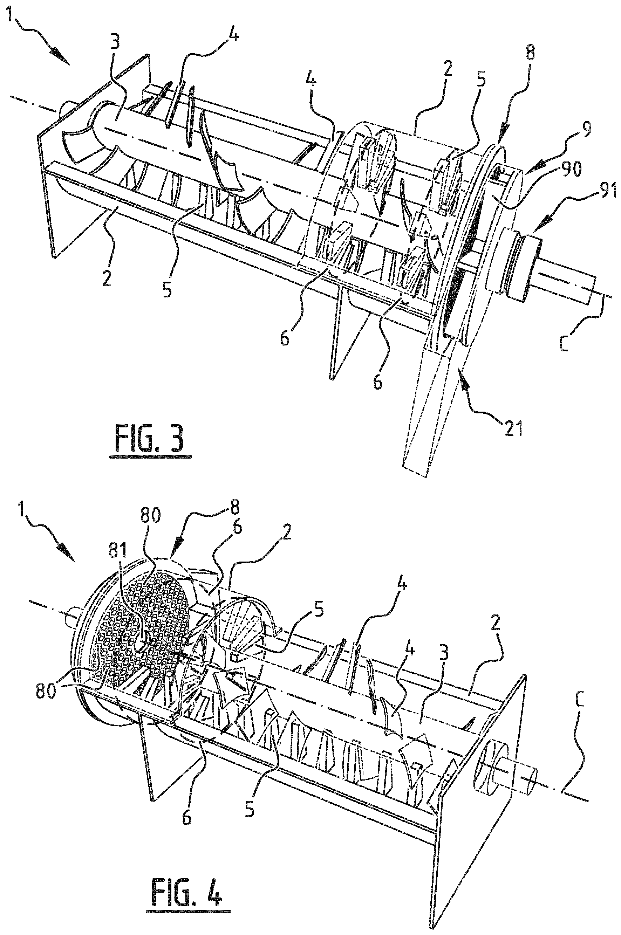

Figure 3 shows a perspective view of a plant processing apparatus 1. The parts of apparatus 1 are designated with reference numerals corresponding to those of figure 2. In order to make the shaft 3 inside housing 2 clearly visible the infeed 20 of housing 2 has been omitted in figure 3, and a part of housing 2 and of shear blades 5 has been made transparent by means of broken lines. It can once again be seen that shaft 3 and milling cutter 9 are arranged coaxially with each other so that they are rotatable about a common central axis C. Figure 3 clearly shows that the cutting blades 4 on shaft 3 are arranged along a helical path all around shaft 3 and extend from shaft 3 in radial direction thereof. Because cutting blades 4 follow a helical path, they contribute to the transport of the plant material (not shown here) from infeed opening 20 of housing 2 to outfeed opening 21 of housing 2. Cutting blades 4 can for instance be curved blades, as shown, but can also be straight blades. It can also be seen that a number of shear blades 5 together form two slowing barriers 6 in that they are arranged on the inner wall of housing 2 all around the shaft 3 at a regular distance from each other and at a determined barrier position in longitudinal direction of shaft 3.

Figure 4 shows the plant processing apparatus 1 according to figure 3 from a different perspective view. In this view the shaft 3 and its cutting blades 4 have been made transparent so that the housing 2 with the shear blades 5 arranged therein and pressing plate 8 and its perforations 80 are clearly visible. As can be seen, the slowing barriers 6 are constructed from several shear blades 5 arranged all around shaft 3 and therefore the central axis C. The shear blades 5 of slowing barriers 6 are arranged such that the effective passage size inside housing 2 for the plant material is locally reduced, whereby the throughput rate of the plant material is therefore also locally reduced. As described above, the plant material is hereby pressed and simultaneously cut by cutting blades 4 and shear blades 5. The plant material is also pressed by extruding it through the perforations 80 of pressing plate 8. After being extruded through plate 8, the solid fraction of the plant material is also cut additionally by milling cutter 9 before it is fed out of the outfeed opening 21 of housing 2. It can also be seen that the perforations 80 in pressing plate 8 have a hexagonal form. As can be seen, pressing plate 8 also has a suspension opening 81 through which shaft 3 can be suspended.

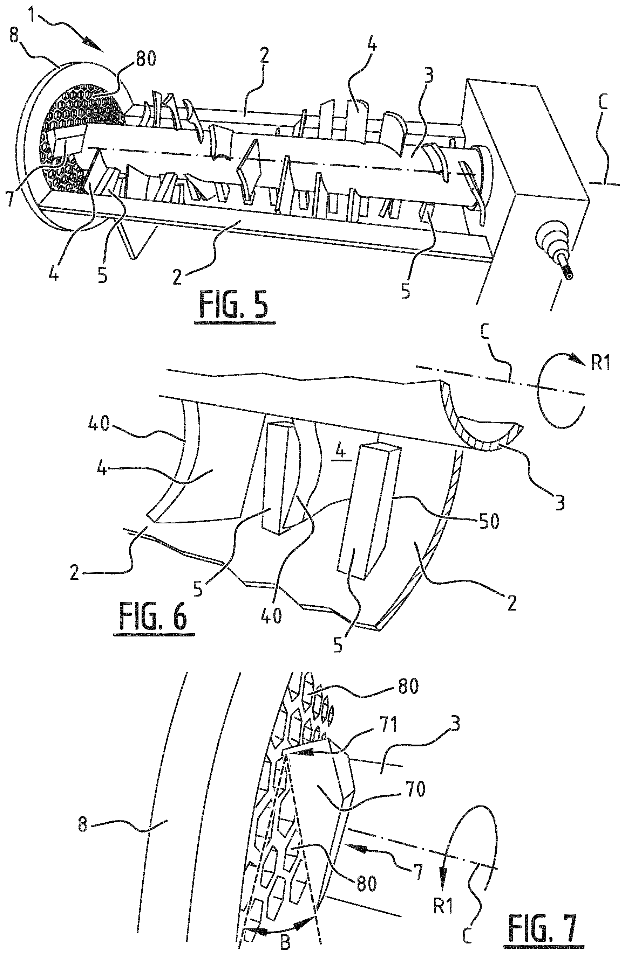

Figure 5 shows a further perspective view of a plant processing apparatus 1. The scraping blade 7 arranged on shaft 3 and adjacently of pressing plate 8 can also be seen clearly here. Scraping blade 7 scrapes residues of the plant material off pressing plate 8 and also enhances the extrusion of the plant material through the perforations 80 of pressing plate 8, as elucidated further below with reference to figure 7.

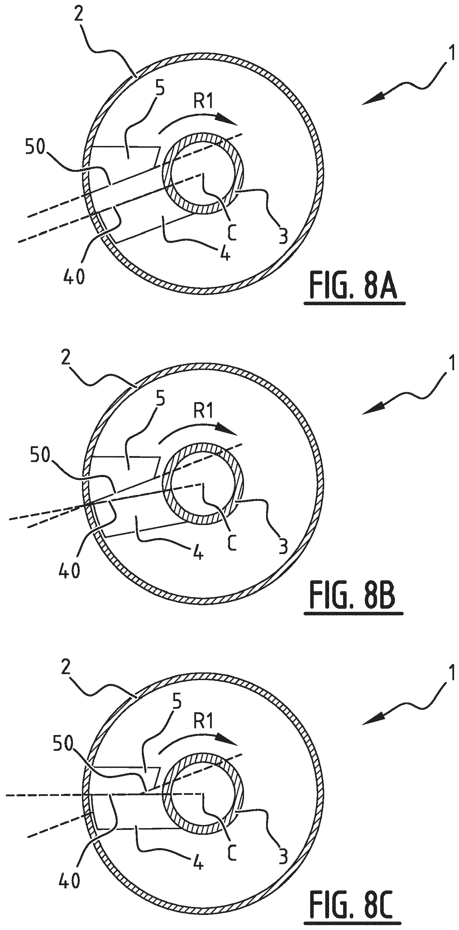

Figure 6 shows a detailed view of apparatus 1, wherein cutting blades 4 and shear blades 5 are shown. As can be seen, cutting blades 4 are mounted on shaft 3 and shear blades 5 on the inner wall of housing 2. Cutting blades 4 each have a first cutting edge 40 and shear blades 5 each have a second cutting edge 50. When shaft 3 rotates in rotation direction R1, the cutting edges 40, 50 move along each other and cut (i.e. shear) the plant material therebetween. As can be seen here, the first cutting edge 40 is curved and the second cutting edge 50 is straight. The first cutting edge 40 can however also be straight or have a different form. The same applies to the second cutting edge 50. The cutting action of the first and second cutting edges 40, 50 is elucidated further below with reference to figures 8A-8C.

Figure 7 shows the scraping blade 7 in further detail. Scraping blade 7 is mounted on shaft 3, abutting the pressing plate 8. Scraping blade 7 has a blade part 70 and a protrusion 71, which is also referred to as scraping nose 71. Scraping nose 71 extends from blade part 70 toward pressing plate 8 and is the part of scraping blade 7 that contributes most to the scraping clean of plate 8. Scraping nose 71 is relatively narrow so that it can break, crumble or wear more easily relative to the rest of scraping blade 7, so that the least amount of damage is done to the rest of apparatus 1 if scraping nose 71 becomes jammed. Scraping nose 71 can be provided releasably on blade part 70 so that it is optionally replaceable. A side of scraping blade 7 facing toward pressing plate 8 also forms an angle B relative to pressing plate 8. A wedge-shaped space is therefore created between scraping blade 7 and pressing plate 8 so that the plant material is forced into the wedge-shaped space, toward scraping nose 71, by rotation of scraping blade 7 in the first rotation direction R1, so that this material is finally forced through the perforations 80 of pressing plate 8.

Figures 8A-8C show a schematic cross-section of apparatus 1, wherein the relative position of cutting blade 4 and shear blade 5 is shown at three moments. The first cutting edge 40 of cutting blade 4 is straight here, wherein a tangent of this first cutting edge 40 runs through the centre of the central axis C. The second cutting edge 50 of shear blade 5 is also straight, wherein a tangent of the second cutting edge 50 does not run through the centre of the central axis C. The angles formed by the first cutting edge 40 and the second cutting edge 50 are chosen such that when cutting edges 40, 50 overlap each other, as can for instance be seen in figure 8C, a distance between cutting edges 40, 50 then increases in the direction of shaft 3. The plant material that ends up between cutting edges 40, 50 is hereby pulled in the direction of shaft 3. As can be seen, shaft 3 turns in the rotation direction R1 so that figures 8A, 8B and 8C succeed each other in time in that order.

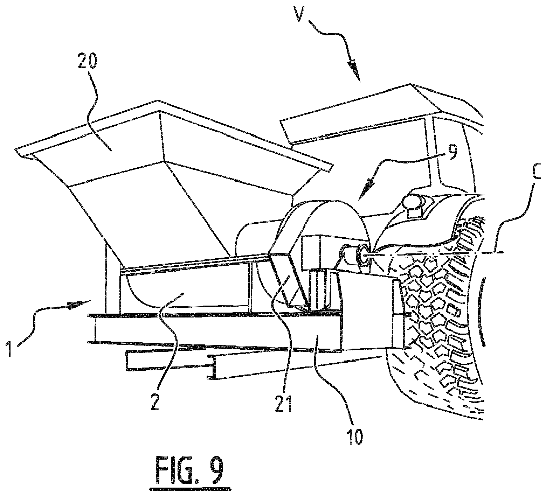

Figure 9 shows a vehicle V, in the present example a tractor V, which is equipped with a plant processing apparatus 1. Apparatus 1 is placed on a support element 10 which is configured to be connected to the vehicle V. The vehicle V can comprise a PTO (not shown) for driving the apparatus 1. An infeed opening 20 of housing 2 can be quite wide and can be arranged at significant height so that a person cannot easily reach it during operation, this enhancing safety. The plant material can be introduced into apparatus 1 through infeed opening 20 and exits outfeed opening 21 as inactive plant material following processing by apparatus 1, as described above. As described above, the shown vehicle V with the apparatus 1 therefore prevents unnecessary transport of plant material and the associated costs and environmental impact, with the additional advantage that the plant species that was processed will not be spread any further by possible loss of the material during such transport. Apparatus 1 therefore provides a strategy for processing plants that is cost-effective and has the smallest environmental impact.

It is noted that the above described examples and embodiments of the invention must not be regarded as limitative for the scope of protection of the appended claims.

## Claims

1. Plant processing apparatus (1) for inactivating plant material, comprising:
a housing (2) with infeed opening (20) for infeed of plant material into a processing compartment of the housing (2);
an elongate shaft (3) placed in the processing compartment of the housing (2) for rotation about its longitudinal axis (C);
at least one first cutting element (4) extending from the shaft (3) in radial direction and rotatable together with the shaft (3) about its longitudinal axis (C);
at least one second cutting element (5) which is connected statically to the housing (2) in the processing compartment, wherein at least one of the at least one first cutting element (4) moves along the at least one second cutting element (5) when the shaft (3) rotates about its longitudinal axis (C) in order to cut the plant material between the two;
a pressing plate (8) with perforations (80) which is arranged in the processing compartment at an outfeed end of the shaft (3) and is placed substantially perpendicularly of the longitudinal axis (C) thereof; and
a milling cutter (9) with at least one third cutting element (90) which is rotatable about a rotation axis, wherein the milling cutter (9) is disposed on a side of the pressing plate (8) remote from the shaft (3), wherein the processed plant material is guided from the milling cutter (9) to an outfeed opening (21) of the housing (2) for outfeed thereof.

2. Plant processing apparatus (1) according to claim 1, wherein the rotation axis (C) of the milling cutter (9) is substantially coaxial with the longitudinal axis (C) of the shaft (3).

3. Plant processing apparatus (1) according to claim 1 or 2, wherein at least some of the perforations (80) have a hexagonal form.

4. Plant processing apparatus (1) according to any one of the foregoing claims,
wherein at least one scraping element (7) is arranged on the shaft (3) at the outfeed end thereof, wherein the scraping element (7) extends in radial direction from the shaft (3) and is rotatable together with the shaft (3) about its longitudinal axis (C), and is configured to scrape plant material off the pressing plate (8), preferably wherein the at least one scraping element (7) comprises a blade part (70) and a protrusion (71) extending from the blade part (70) toward the pressing plate (8), wherein the scraping element (7) is configured to scrape plant material off the pressing plate (8) using substantially the protrusion (71).

5. Plant processing apparatus (1) according to any one of the foregoing claims, wherein a number of second cutting elements (5) are arranged at a barrier position in the longitudinal direction of the shaft (3) all around the shaft (3) and at a distance from each other in order to thus form a slowing barrier (6), such that the transport of the plant material toward the outfeed end of the shaft (3) is slowed down by the slowing barrier (6), preferably wherein the plant processing apparatus (1) comprises at least two slowing barriers (6) placed at a distance from each other in the longitudinal direction of the shaft (3).

6. Plant processing apparatus (1) according to any one of the foregoing claims, wherein a number of first cutting elements (4) are arranged along a helical path on and around the shaft (3), such that the transport of the plant material from the infeed opening (20) toward the outfeed end of the shaft (3) is enhanced.

7. Plant processing apparatus (1) according to any one of the foregoing claims, wherein during operation of the plant processing apparatus (1) the shaft (3) rotates at a first rotational speed and the milling cutter (9) rotates at a second rotational speed, wherein the first rotational speed and the second rotational speed differ from each other, preferably wherein the second rotational speed is higher than the first rotational speed.

8. Plant processing apparatus (1) according to any one of the foregoing claims, wherein a bottom of the housing (2) comprises a liquid outlet (22).

9. Plant processing apparatus (1) according to any one of the foregoing claims, wherein, when cutting edges (40, 50) of the at least one second cutting element (5) and an at least one first cutting element (4) lying adjacently in the longitudinal direction of the shaft (3) intersect each other, as seen from a cross-section perpendicularly of the longitudinal axis of the shaft (3), a distance between the cutting edges (40, 50) increases in the direction of the shaft (3).

10. Plant processing apparatus (1) according to any one of the foregoing claims, wherein the milling cutter (9) is pressed toward the pressing plate (8) by means of a resilient element (91), preferably wherein the resilient element is a spring (91), and more preferably a compression spring (91).

11. Vehicle (V) equipped with a plant processing apparatus (1) according to any one of the foregoing claims.

12. Method (100) for inactivating plant material (M0), comprising the steps of:
cutting up (101) the plant material (M0);
simultaneously pressing (102) and cutting up (101) the cut-up plant material (M1);
extruding (103) a solid fraction (S0) of the pressed and cut-up plant material; and
additionally cutting (104) the solid fraction (S1) of the pressed and cut-up plant material, and preferably further comprising the step of:
discharging a liquid fraction (L) of the pressed and cut-up plant material.

13. Method (100) according to claim 12, further comprising the steps of:
providing a plant processing apparatus (1) according to any one of the claims 1-10, wherein:
the step of cutting up (101) the plant material is performed by means of at least the at least one first cutting element (4) and the at least one second cutting element (5),
the step of simultaneously pressing (102) and cutting up (101) the cut-up plant material is performed by means of at least the at least one first cutting element (4), the at least one second cutting element (5), and preferably also the pressing plate (8),
the step of extruding (103) the solid fraction of the pressed and cut-up plant material is performed by means of at least the pressing plate (8), and
the step of additionally cutting (104) the solid fraction of the pressed and cut-up plant material is performed by means of at least the milling cutter (9), and preferably further comprising the steps of:
feeding in the plant material via the infeed opening (20) of the housing (2); and/or
feeding out the additionally cut solid fraction via the outfeed opening (21).

14. Method (100) according to claim 12, when dependent on claim 8, wherein the step of discharging a liquid fraction (L) of the pressed and cut-up plant material is performed by means of at least the liquid outlet (22).

15. Use of the plant processing apparatus (1) according to any one of the claims 1-10 or the vehicle (V) according to claim 11 for performing the method (100) according to any one of the claims 12-14.
